Europäisches Patentamt

European Patent Office

Office européen des brevets

(19)

(11) Publication number: **0 275 502 B1**

## EUROPEAN PATENT SPECIFICATION

(12)

(45) Date of publication of patent specification: **07.10.92**  (51) Int. Cl.5: **D21C 9/00**, F28F 13/12

(21) Application number: **87118725.8**

(22) Date of filing: **17.12.87**

(54) **A method for heating and cooling pulps and a heat exchanger and plant for applying the method.**

(30) Priority: **17.12.86 FI 865137**

(43) Date of publication of application:
**27.07.88 Bulletin 88/30**

(45) Publication of the grant of the patent:
**07.10.92 Bulletin 92/41**

(84) Designated Contracting States:
**AT DE FR SE**

(56) References cited:
**CA-A- 1 102 604**
**DE-A- 2 634 166**
**US-A- 3 138 947**
**US-A- 3 174 313**
**US-A- 3 293 118**

**JOURNAL OF THE TECHNICAL ASSOCIATION OF THE PULP AND PAPER INDUSTRY, vol. 64, no. 6, June 1981, pages 69-72, ATLANTA, GEORGIA, US; J. GULLICHSEN et al.: "Medium consistency technology I. fundamental data"**

(73) Proprietor: **A. AHLSTROM CORPORATION**

**SF-29600 Noormarkku(FI)**

(72) Inventor: **Henricson, Kaj**
**Eteläpuistokatu 2**
**SF-48100 Kotka(FI)**

(74) Representative: **Görg, Klaus, Dipl.-Ing. et al Hoffmann, Eitle & Partner Arabellastrasse 4 (Sternhaus)**
**W-8000 München 81(DE)**

EP 0 275 502 B1

# Description

The present invention relates to a method, an apparatus and a plant for heating and/or cooling of pulps. The method, the apparatus and the plant according to the invention are specially efficient when heating or cooling medium or high-consistency pulps.

In the pulp industry, it is often necessary to heat or cool high-consistency pulps in the range of consistency of 6 to 20 %. So far, this procedure has not been efficient with an indirect heat exchanger. Let us first review by way of some examples, how pulp is heated or cooled in a mill scale on the latest technique.

In bleaching pulp, its temperature must often be raised by 10 to 20 °C in order to achieve the correct reaction temperature. The temperature is normally raised in such a way that steam is mixed with the stock before pumping. Mixing is effected by either a pin-type mixer or steam injectors into, for example, a drop leg preceding the stock pump. This technique involves for example the following disadvantages. The condensate generated when steam is condensing into the stock cannot be recovered. Thus, stock is diluted and the pure condensate is wasted both by the use of feed water and as heat content. Another drawback is noise caused by this type of direct heating. A third drawback is that, not very high amounts of steam can be mixed with stock because of the high steam volume. To avoid the above-mentioned disadvantages, an indirect method of heating for high-consistency pulp would be desirable.

Today, cooling of pulp is arranged in pulp mills by letting the pulp expand thereby reducing the pressure or by diluting the pulp by cold fluid. Pulp is generally cooled after the digester by leading it into a blow tank for expansion. In this way, the cooling of the pulp is effected according to the dependence of the boiling point on the pressure. In cooking, for example, the pressure is about 8 bar and the temperature about 170 °C; in the blow tank there prevails the atmospheric pressure the temperature being about 100 °C. A condenser is needed to recover the steam generated. This cooling technique is good in practice, but is unnecessarily expensive and in sulphate processes, for example, it causes unpleasant odours in connection with steam leakages. Cooling of pulp with a cooler fluid so as to lower the consistency is an arrangement that functions as such, but it causes some problems because the used cooling fluid has to be removed at later stages of the process. In this case it would also be desirable to have an indirect method of cooling of high-consistency pulp.

High-consistency pulp forms a strong fibre network in the consistency range of 6 to 20 %, and distributing or uniting pulp in the flow channels is impossible without special measures. When high-consistency pulp enters a branching point, the fibre network may be too strong for the pulp flow to be distributed automatically. The fibre network may stick to uneven points of the flow channel, which causes dewatering and clogging. Joining of two flows is also difficult. The inner forces of the fibre network are too high for two small partial flows to form a uniform, greater flow without special measures.

The following describes some arrangements based on indirect heat exchange of the prior art and some reasons why they are not applicable to the high-consistency pulp.

DE-A-1601180 discloses a heat exchanger with an agitating propeller or a pumping propeller at the fluid inlet opening. Such heat exchanger is not applicable to high-consistency pulp because the pulp cannot be made to move evenly from the inlet to the outlet openings. The heat exchanger will either be clogged or channeled, whereby the heat surface remains unused. When flowing slowly, the high-consistency pulp is almost solid in the consistency range of 6 to 20 %.

DE-A-2634166 discloses a heat exchanger with heat transfer piping and an agitating element, by means of which element the fluid to be heated is circulated in a tank. Such a heat exchanger is not applicable to high-consistency pulp for two reasons. Firstly, high-consistency pulp is too stiff for propellers to stir it; only a circular mixing zone will be formed where the propeller blade moves. Secondly, high-consistency pulp is not capable of moving in a flow-like manner around the heat transfer pipes.

US-A-3,759,318 discloses a heat exchanger with an internal propeller pump, by means of which the fluid to be heated is circulated in the heat exchanger. Such a heat exchanger is not applicable to high-consistency pulp for two reasons. Firstly, high-consistency pulp cannot be pumped with a propeller type pump. The flow properties of high-consistency pulp are not similar to those of a liquid material; it is primarily a semi-solid substance. Secondly, high-consistency pulp is not capable of flowing evenly between the heat transfer pipes. High-consistency pulp flow is not distributed and united in such a way as liquid materials.

A further prior art that is of interest is CA-A-1 102 604 in which a fluidized fibre suspension is heated or cooled by bringing it in indirect heat exchange contact with a heat exchange medium. This is done by causing the fluidized fibre suspension to flow through a cylindrical casing surrounded by a chamber or chambers containing said heat exchange medium. Within the cylindrical casing is a driven rotor that is co-axial with and surrounded by the cylindrical casing. This rotor serves to fluidize the pulp in the space that exists between the rotor and the cylindrical casing. Such an arrangement tends to cause the pulp to be rotated where it contacts the rotor drum and so causes a shearing action between the radially inner layer of pulp and the radially outer layer of pulp, so that effectively only the outer layer of pulp is subjected to heating or cooling by the heat exchanger.

The drawbacks of the various methods disclosed above have been solved by the method of the present invention according to which where pulp is to be heated or cooled by distributing it over heat transfer surfaces, the bonds between the fibres of the pulp are loosened by energy that is applied to the pulp at least immediately before said indirect heat transfer and said indirect heat transfer is carried out whilst the pulp is flowing through a plurality of separate channels.

The present invention also provides a heat exchanger for indirectly heating or cooling flowing pulps, comprising two end sections, a heat transfer section therebetween, inlet and outlet connections for the pulp, inlet and outlet connections for the heat transfer medium; and fluidizing means for loosening the bonds between the fibres of the pulp, the fuidizing means being situated at least immediately before the heat transfer section; and the heat transfer section comprising a plurality of separate channels.

The present invention also provides a plant for heating and pumping pulp. The plant comprises a pump for supplying pulp to a pipe; a recirculating pipe for receiving part of the pulp flow through said pipe leading to a drop leg on the suction side of the pump and the provision of a heat exchanging system operating according to the above method that is positioned between said drop leg and said recirculating pipe.

Other characteristics of the method, apparatus and plant according to the invention are presented in the enclosed claims.

The invention is further described below with reference being made to the accompanying drawings, in which

Fig. 1
is a sectional side view of a preferred embodiment of the heat exchanger according to the invention,

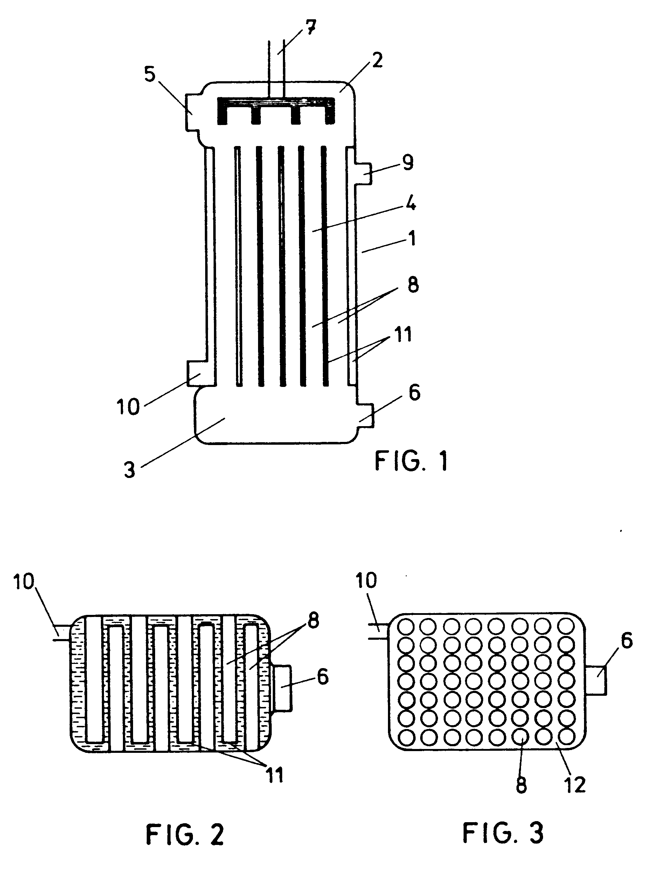

Fig. 2
is a sectional top view of the heat exchanger of Fig. 1,

Fig. 3
is a sectional top view of a heat exchanger in accordance with another embodiment of the invention,

Fig. 4a, 4b, and 5
illustrations of various equipment for loosening the bonds between the fibres,

Fig. 6
shows schematically an end of the heat exchanger of the invention, the design of which end effects loosening of the bonds between the fibres, and

Fig. 7 and 8
illustrate a preferred application of the heat exchanger according to the invention.

In accordance with Fig. 1, the heat exchanger 1 of the invention comprises three main sections, i.e. end sections 2 and 3, in other words the top end 2 and the bottom end 3 and the heat transfer section 4 itself. Attached to the end sections 2 and 3 is a pulp inlet connection 5 and an outlet connection 6 respectively. Furthermore, at least one of the end sections is arranged with a device 7 for bringing the high-consistency pulp into a flowing form so as to enable it to flow freely to channels 8 of the heat transfer section 4. Apart from the pulp channels 8 the heat transfer section 4 comprises inlet and outlet connections 9 and 10 for the heat transfer medium as well as a flow network 11 or 12 joining said connections.

The flow route 11 of the heat transfer medium may, in accordance with figures 2 and 3, be formed of either a continuous channel winding inside the heat transfer section 4, in which case the pulp channels 8 are also relatively large and they are provided with plate walls (Fig. 2) or of a single space 12 arranged with a number of parallel, tubular pulp channels 8, between which channels the heat transfer medium flows. The cross sections of said tubular pulp channels 8 are preferably circular (Fig. 3). Of the two alternatives presented hereinabove, the version shown in Fig. 3 has a higher heat transfer capacity because it has a considerably larger heat transfer surface than the apparatus shown in Fig. 2.

In general outline, indirect heat exchangers as presented hereinabove are known in practice. When compared with the equipment of the prior art, the only difference in the heat exchanger according to the invention is the apparatus, which subjects the pulp to such a high amount of energy that the bonds between the fibres in the pulp will loosen, whereby the fibre network will unravel and the high-consistency pulp will change to a flowing form like a liquid, i.e. it will fluidize. Normally, pulp forms a three-dimensional fibre network and the stiffness of the fibres makes it strong and the suspension semi-solid. It is known that by causing shear forces that are high and fast enough, the network can be broken and the suspension liquified. This phenomenon is called fluidization. The process is reversible, i.e. the network will be reformed as soon as the shear forces no longer affect.

This is the only way of making the pulp flow through the pulp channels to the heat transfer section. This fluidization phenomenon is known as such of centrifugal pumps for medium-consistency pulp, i.e. of so-called MC-pumps, in which it has been used successfully for years. In these pumps, there is a rotor in front of the pump impeller, said rotor fluidizing the pulp so as to enable the pulp to flow into the pump and to be pumped there.

In a heat exchanger, a corresponding fluidizing element has to be capable of unravelling the fibre network in such a large area that the pulp coming from the inlet connection 5 and entering the heat exchanger can be distributed uniformly to all pulp channels of the heat transfer section. Solidification of the pulp, when forming a new fibre network in said channels, is no obstacle as such because the flow may proceed in the channels also as a so-called plug flow. Consequently, however, a fluidizing element may be needed also at the other end of the heat exchanger, said element making it possible that the single pulp flows coming form different pulp channels can be united and the pulp be discharged for further treatment.

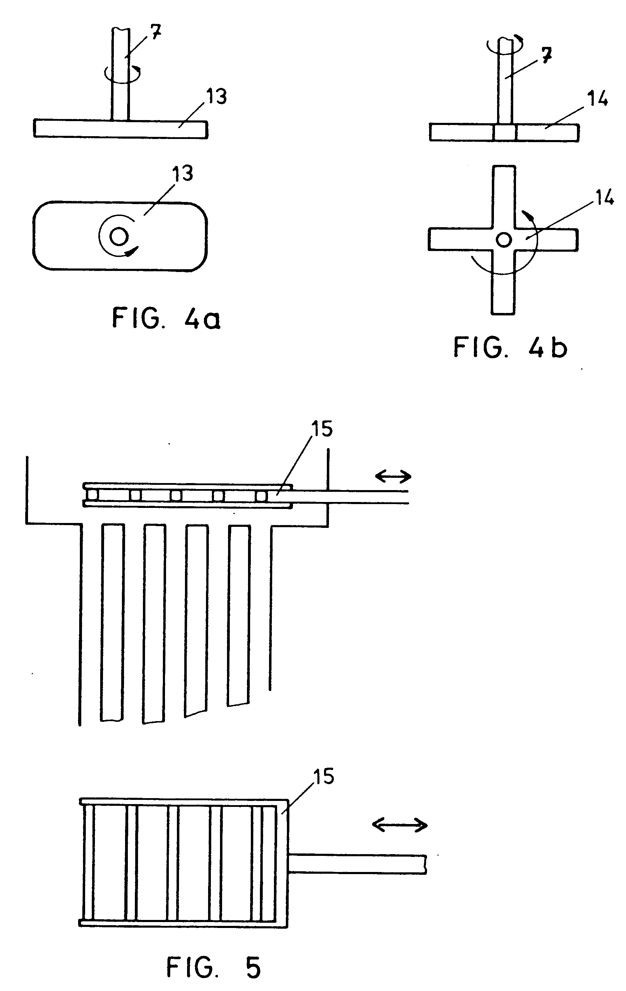

Fluidization can be effected by a great number of different devices. A rotor used along with a centrifugal pump was already mentioned hereinabove, which arrangement also has several alternative today. It is possible to fluidize a fibre suspension by using for example a rotor 13 (Fig. 4a), the cross section of which is a rectangle with rounded angles, or a star-type rotor 14 (Fig. 4b), the blades of which radially protrude from the rotor center and axially extend over nearly the whole area to be fluidized. Furthermore, it is possible to use a rotor, the blades of which are disposed at an axial distance from the rotor center, where a cylindrical empty space will thus be formed. The fluidizator may also be a kind of vibrator 15 (Fig. 5) which effects the movement needed for loosening the bonds between the fibres. Most essential to the fluidizing element is, however, that it feeds turbulence energy to the pulp suspension to such an extent that the pulp will fluidize, whereby it will be capable of being distributed into the pulp channels of the heat transfer section. The amount of turbulence energy or energy to be fed into pulp in general depends on pulp consistency, temperature, fibre quality, pulp pH, etc., which is why an unequivocal definition based on some figure is impossible. However, the fluidization itself can be seen in the pulp both visually and by measurements. It is also essential that the fluidization effect extends to the entire area bordered by the end space of the heat exchanger. Fluidization is most simply achieved by means of the rotor extending across the whole width of the end section or by another correspondingly fluidizing element.

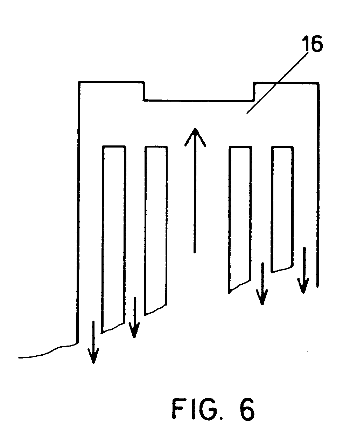

In some cases, fluidization may also be effected by a correct geometrical design of the heat exchanger end section, whereby such a high inlet velocity is required of the pulp that its kinetic energy is sufficient for bringing about fluidization while changing into turbulence energy. Such fluidization primarily comes into question at the more diluted end of said consistency range, whereby the required flow velocity of the pulp can still be reached. In view of the pulp particles, it does not matter whether the turbulence required for fluidization is generated by the rotation of the rotor in a static pulp or by the moving pulp when this hits the static element which generates turbulence. Thus, it is possible to equip the heat exchanger end with e.g. suitable ribs to effect fluidization or with a flat surface 16 (Fig. 6) which the fast moving pulp hits, consequently fluidizing temporarily and flowing to the heat transfer channels. Similarly, provided that the flow velocity of the pulp stays high enough, it is possible to unite the flows at the other end of the heat exchanger thanks to its appropriate design. The pulp flow can also be maintained by providing the heat transfer section with such pulp channels that widen in the flow direction, whereby the risk of these channels becoming clogged is considerably smaller.

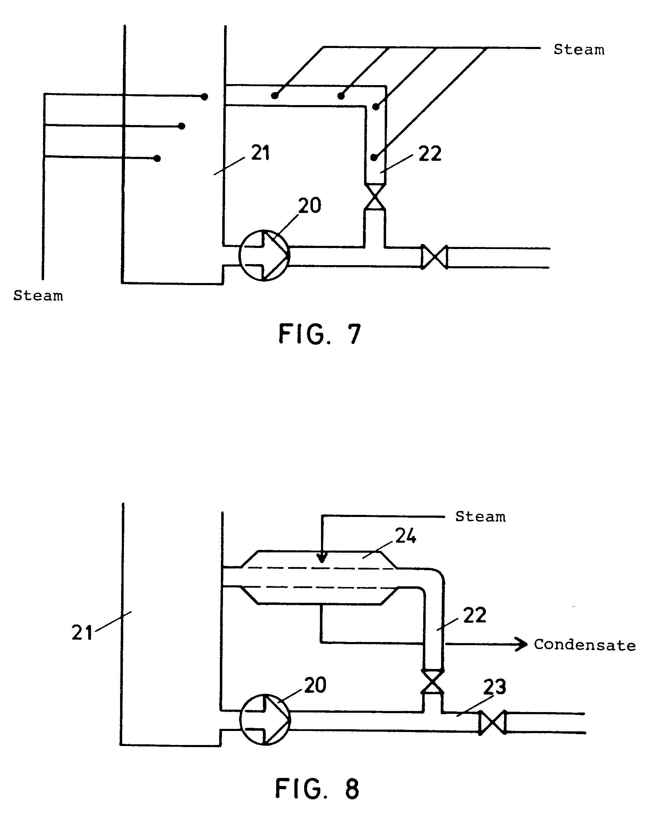

A preferred application of the heat exchanger according to the invention is heating of the pulp in connection with pumping. Pulp can be heated in accordance with Fig. 7 by adding steam to the drop leg 21 on the suction side of the pump 20 or by arranging for a separate recirculation 22, to which steam can be brought. The recirculation 22 is necessary when it is not possible to bring enough steam to the drop leg 21 because of, for example, arching problems. This known technique, however, involves the drawback of losing the condensate.

A better way of heating the pulp is disclosed in Fig. 8. The actual production pipe 23 of the pump 20 has no extra pressure loss because there is no heat exchanger. The heat exchanger 24 is disposed in the recirculation 22. By this technique, the pulp can be heated with no pressure loss caused in the main pipe by the heat exchanger 24. Thanks to indirect heating it is possible to use low-pressure steam.

As can be seen from the above description, an entirely new method, apparatus and plant has been developed, which eliminates the problems and drawbacks of previous arrangements and which has several different embodiments considerably deviating from each other. Although the above description handles applying of the method to the high-consistency pulp only, it can be as well applied to all types of pulps and equivalents.

## Claims

1. A method of heating or cooling flowing pulps by indirect heat transfer comprising;
   loosening the bonds between fibres of the pulp by applying energy to the pulp to fluidize it and distribute it over heat transfer surfaces; **characterized in that**
   (a) said energy is applied to the pulp at least immediately before said indirect heat transfer; and
   (b) said indirect heat transfer is carried out whilst the pulp is flowing through a plurality of separate channels.

2. A method according to Claim 1, characterized in that the pulp is subjected to energy by feeding the pulp at a high velocity against a fluidizing surface immediately before distributing the pulp to said separate channels.

3. A method according to Claim 1, characterized in that the pulp is subjected to energy by treating the pulp by a moving element immediately before distributing the pulp to said separate channels.

4. A method according to any one of Claims 1 to 3 characterized in that said plurality of separate channels receive part of a pulp flow from a pump (20) for said pulp and return said part of the pulp flow to the suction side of the pump.

5. A heat exchanger for indirectly heating or cooling flowing pulps, comprising two end sections (2, 3), a heat transfer section (4) therebetween, inlet and outlet connections (5, 6) for the pulp, inlet and outlet connections (9, 10) for the heat transfer medium; and fluidizing means for loosening the bonds between the fibres of the pulp, characterized in that the fluidizing means (7, 15, 16) are situated at least immediately before the heat transfer section (4) and that the heat transfer section (4) comprises a plurality of separate channels (8).

6. A heat exchanger according to Claim 5, characterized in that the means for loosening the bonds between the fibres is disposed in the end section (2) that is upstream of the heat transfer section (4).

7. A heat exchanger according to Claim 6, characterized in that means for loosening the bonds between the fibres is also disposed in the end section (3) that is downstream of the heat transfer section (4).

8. A heat exchanger according to Claim 5, characterized in that the device (7) for loosening the bonds between the fibres comprises a rotor having blades that subject the pulp to the amount of energy required for the fluidization of said pulp.

9. A heat exchanger according to Claim 5, characterized in that the device (7) for loosening the bonds between the fibres comprises one or more vibrators which subject the pulp to the amount of energy required for the fluidization of said pulp.

10. A heat exchanger according to Claim 5, characterized in that the device for loosening the bonds between the fibres comprises a surface which mixes the pulp suspension efficiently.

11. A plant for heating and pumping pulp comprising a pump (20) for supplying pulp to a pipe (23); a recirculation pipe (22) for receiving part of the pulp flow through said pipe (23) leading to a drop leg (21) on the suction side of the pump (20), characterized in that the pulp inlet connection (5) of a heat exchanger (24) according to any one of Claims 5 to 10 being connected to said pipe (22) for receiving part of the pulp flow; and the pulp outlet connection (6) of said heat exchanger being coupled to the drop leg (21).

## Patentansprüche

1. Verfahren zur Erwärmung oder Abkühlung von fließenden Pulpen durch indirekten Wärmetausch, bestehend aus: Lockerung der Bindungen zwischen den Fasern der Pulpe durch Zuführung von Energie in die Pulpe, um dieselbe zu fluidisieren und sie über die Wärmetauschflächen zu verteilen;
   dadurch **gekennzeichnet, daß**
   (a) besagte Energie der Pulpe mindestens unmittelbar vor dem indirekten Wärmetausch zugeführt wird; und
   (b) besagter indirekter Wärmetausch stattfindet wird, während die Pulpe durch eine Vielzahl getrennter Kanäle fließt.

2. Verfahren gemäß Anspruch 1, dadurch **gekennzeichnet,** daß der Pulpe Energie zugeführt wird, indem die Pulpe mit einer hohen Geschwindigkeit gegen eine fluidisierende Fläche geleitet wird unmittelbar bevor die Pulpe auf die genannten getrennten Kanäle verteilt wird.

3. Verfahren gemäß Anspruch 1, dadurch **ge-**

**kennzeichnet,** daß der Pulpe Energie zugeführt wird, indem die Pulpe durch ein bewegtes Organ behandelt wird unmittelbar bevor sie auf die genannten getrennten Kanäle verteilt wird.

4. Verfahren gemäß einem der Ansprüche 1 bis 3, dadurch **gekennzeichnet,** daß besagte Vielzahl getrennter Kanäle einen Teil eines Pulpeflusses von einer Pumpe (20) für besagte Pulpe empfängt und besagten Teil der Pulpeflusses auf die Saugseite der Pumpe zurückführt.

5. Wärmetauscher zur indirekten Erwärmung oder Abkühlung von fließenden Pulpen, bestehend aus zwei Endabschnitten (2, 3), einem Wärmeübertragungsabschnitt (4) dazwischen, Eintritts- und Austrittsstutzen (5, 6) für die Pulpe, Eintritts- und Austrittsstutzen (9, 10) für den Wärmeträger; und einem Fluidisierungsorgan zur Lockerung der Bindungen zwischen den Fasern der Pulpe, dadurch **gekennzeichnet,** daß die Fluidisierungsorgane (7, 15, 16) mindestens unmittelbar vor dem Wärmeübertragungsabschnitt (4) positioniert sind und daß der Wärmeübertragungsabschnitt (4) aus einer Vielzahl getrennter Kanäle (8) besteht.

6. Wärmetauscher gemäß Anspruch 5, dadurch **gekennzeichnet,** daß die Vorrichtung zur Lockerung der Bindungen zwischen den Fasern im Endabschnitt (2) angeordnet ist, der stromaufwärts vom Wärmeübertragungsabschnitt (4) liegt.

7. Wärmetauscher gemäß Anspruch 6, dadurch **gekennzeichnet,** daß die Vorrichtung zur Lockerung der Bindungen zwischen den Fasern auch im Endabschnitt (3) angeordnet ist, der stromabwärts vom Wärmeübertragungsabschnitt (4) liegt.

8. Wärmetauscher gemäß Anspruch 5, dadurch **gekennzeichnet,** daß die Vorrichtung (7) zur Lockerung der Bindungen zwischen den Fasern aus einem Läufer mit Blättern besteht, die der Pulpe eine Energiemenge zuführen, die zur Fluidisierung besagter Pulpe ausreicht.

9. Wärmetauscher gemäß Anspruch 5, dadurch **gekennzeichnet,** daß die Vorrichtung (7) zur Lockerung der Bindungen zwischen den Fasern aus einem oder mehreren Vibratoren besteht, die der Pulpe eine Energiemenge zuführen, die zur Fluidisierung besagter Pulpe ausreicht.

10. Wärmetauscher gemäß Anspruch 5, dadurch **gekennzeichnet,** daß die Vorrichtung (7) zur Lockerung der Bindungen zwischen den Fasern aus einer Fläche besteht, die die Pulpesuspension wirksam durchmischt.

11. Anlage für das Erwärmen und Pumpen von Pulpe, bestehend aus einer Pumpe (20) zur Zuführung von Pulpe in ein Rohr (23); einem Rezirkulationsrohr (22) zur Aufnahme eines Teils des Pulpeflusses durch besagtes Rohr (23), das zu einem Fallrohr (21) auf der Saugseite der Pumpe (20) führt, dadurch **gekennzeichnet,** daß der Pulpe-Eintrittsstutzen (5) des Wärmetauschers (24) gemäß einem der Ansprüche 5 bis 10 mit besagtem Rohr (22) zur Aufnahme eines Teils des Pulpeflusses verbunden ist; und daß der Pulpe-Austrittsstutzen (6) Wärmetauschers mit dem Fallrohr (21) verbunden ist.

**Revendications**

1. Procédé pour chauffer ou refroidir des pâtes de cellulose en cours d'écoulement par un transfert de chaleur indirect, comprenant :
   le relâchement des liaisons entre les fibres de la pâte de cellulose par application d'une énergie à cette pâte de manière à la fluidifier et à la distribuer sur des surfaces de transfert de chaleur ;
   **caractérisé** en ce que
   (a) on applique l'énergie précitée à la pâte au moins immédiatement avant le transfert de chaleur indirect ; et
   (b) on effectue le transfert de chaleur indirect pendant que la pâte s'écoule à travers une pluralité de canaux séparés.

2. Procédé selon la revendication 1, **caractérisé** en ce que l'on soumet la pâte à une énergie en avançant la pâte à une vitesse élevée contre une surface de fluidification immédiatement avant de distribuer la pâte aux canaux séparés.

3. Procédé selon la revendication 1, **caractérisé** en ce que l'on soumet la pâte à une énergie en traitant la pâte à l'aide d'un élément en mouvement immédiatement avant de distribuer la pâte aux canaux séparés.

4. Procédé selon l'une quelconque des revendications 1 à 3, **caractérisé** en ce que la pluralité de canaux séparés reçoit une partie d'un flux de pâte en provenance d'une pompe (20) destinée à pomper cette pâte et renvoie ladite partie du flux de pâte au côté aspiration de la pompe.

5.   Echangeur de chaleur pour chauffer ou refroidir indirectement des pâtes de cellulose en cours d'écoulement, comprenant deux sections d'extrémité (2, 3), une section (4) de transfert de chaleur entre ces sections d'extrémité, des raccordements d'entrée et de sortie (5, 6) pour la pâte, des raccordements d'entrée et de sortie (9, 10) pour le fluide de transfert de chaleur ; et des moyens de fluidification pour relâcher les liaisons entre les fibres de la pâte, **caractérisé** en ce que les moyens de fluidification (7, 15, 16) sont situés au moins immédiatement avant la section (4) de transfert de chaleur et en ce que la section (4) de transfert de chaleur comprend une pluralité de canaux séparés (8).

6.   Echangeur de chaleur selon la revendication 5, **caractérisé** en ce que les moyens pour relâcher les liaisons entre les fibres sont disposés dans la section d'extrémité (2) qui se trouve en amont de la section (4) de transfert de chaleur.

7.   Echangeur de chaleur selon la revendication 6, **caractérisé** en ce que les moyens pour relâcher les liaisons entre les fibres sont également disposés dans la section d'extrémité (3) qui se trouve en aval de la section (4) de transfert de chaleur.

8.   Echangeur de chaleur selon la revendication 5, **caractérisé** en ce que le dispositif (7) pour relâcher les liaisons entre les fibres comprend un rotor comportant des ailettes qui soumettent la pâte à la quantité d'énergie nécessaire pour la fluidification de cette pâte.

9.   Echangeur de chaleur selon la revendication 5, **caractérisé** en ce que le dispositif (7) pour relâcher les liaisons entre les fibres comprend un ou plusieurs vibrateurs qui soumettent la pâte à la quantité d'énergie nécessaire pour la fluidification de cette pâte.

10.  Echangeur de chaleur selon la revendication 5, **caractérisé** en ce que le dispositif pour relâcher les liaisons entre les fibres comprend une surface qui mélange efficacement la suspension de pâte.

11.  Installation pour chauffer et pomper de la pâte de cellulose, comprenant une pompe (20) pour envoyer la pâte à un tuyau (23) ; un tuyau de recirculation (22) pour recevoir une partie du flux de pâte circulant à travers le tuyau (23) menant à une branche (21) d'égouttage sur le côté aspiration de la pompe (20), **caractérisée** en ce que le raccordement (5) d'entrée de pâte d'un échangeur de chaleur (24) selon l'une quelconque des revendications 5 à 10 est raccordé au tuyau (22) servant à recevoir une partie du flux de pâte ; et le raccordement (6) de sortie de pâte de l'échangeur de chaleur est couplé à la branche (21) d'égouttage.

FIG. 1

FIG. 2

FIG. 3

FIG. 4a

FIG. 4b

FIG. 5

FIG. 6

**FIG. 7**

**FIG. 8**